# EUROPEAN PATENT APPLICATION

(11) **EP 1 465 423 A1**
(43) Date of publication of application: **06.10.2004**
(21) Application number: 04005279.7
(22) Date of filing: 05.03.2004
(51) Int. Cl.: H04N 7/14

(54) **Videophone device and data transmitting/receiving method applied thereto**

(30) Priority: 31.03.2003 JP 2003096297
(71) Applicant: Kabushiki Kaisha Toshiba, Tokyo 105-8001 (JP)
(72) Inventor: Haruki, Kosuke, c/o Toshiba Corporation, Minato-ku Tokyo 105-8001 (JP)
(74) Representative: Henkel, Feiler & Hänzel

(57) **Abstract**

A videophone device for transmitting/receiving an image and voice to/from another device through a network, includes a voice input unit (22) configured to input voice data, an image input unit (30) configured to input image data, a text data generating unit (27, 34) configured to generate text data while at least one of the image data and the voice data is being input, a synthesizing unit (36) configured to synthesize the voice data, the image data and the text data to obtain data, and a communication unit (38) configured to transmit the data obtained by the synthesizing unit.

## Description

The present invention relates to a videophone device and a data transmitting/receiving method applied thereto.

A conventional videophone device can transmit an image and voice to a videophone device of a party at the other end of a communication link, through a communication network. Furthermore, a videophone system is disclosed (in, e.g., Jpn. Pat. Appln. KOKAI Publication No. 2002-165193), which can provide attendant information in addition to an image and voice. This video phone system includes an information providing device and a telephone switching system which are connected together. The information providing device detects a keyword from voice data exchanged between the videophone devices, selects from a storage section, attendant information associated with the detected keyword, and makes the videophone devices display the attendant information. As the attendant information, advertisement information or service information is provided. The advertisement information is information for advertising an enterprise or a store (advertiser) which ties up with the system. As the service information, various kinds of information considered to be useful to the user (such as a weather forecast and a road map) is provided.

In such a manner, in the above conventional video phone device, attendant information is displayed in addition to transmission of an image and voice. However, in the videophone system, the videophone device can merely display attendant information, which is not necessarily required for conversation since the videophone device is provided on the premise that only an image and voice can be used by the user. Thus, such a feature is not useful. To be more specific, even if the attendant information is displayed, the user cannot know from the attendant information the content of the speech of the party of the other end. That is, the conventional videophone device and video phone system do not a technique which also enables a deaf person to communicate with a party of the other end of a communication link by using the videophone device.

The object of the present is to provide a videophone device which can handle a character string expressing the content of a user's speech, in addition to an image and voice, and data transmitting/receiving method of the videophone device.

According to an embodiment of the present invention, there is provided a videophone device for transmitting/receiving an image and voice to/from another device through a network, comprises a voice input unit configured to input voice data, an image input unit configured to input image data, a text data generating unit configured to generate text data while at least one of the image data and the voice data is being input, a synthesizing unit configured to synthesize the voice data, the image data and the text data to obtain data, and a communication unit configured to transmit the data obtained by the synthesizing unit.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram of the structure of a video phone system according to an embodiment of the present invention.
FIG. 2 is a block diagram of the structure of each of videophone devices 12 and 14 in the embodiment of the present invention.
FIG. 3 is a view for showing transmission of data from the videophone device 12 to the videophone device 14 in the embodiment of the present invention.
FIG. 4 is a flowchart for explaining the operation of the videophone device 12 on the transmitting side in the embodiment of the present invention.
FIG. 5 is a view for showing a relationship between video and voice (conversation period) and an execution period of a voice recognition processing.
FIG. 6 is a view for showing transmission of data from the videophone device 14 to the videophone device 12 in the embodiment of the present invention.
FIG. 7 is a flowchart for explaining the operation of the videophone device 14 on the transmitting side in the embodiment of the present invention.
FIG. 8 is a flowchart for explaining the operation of the videophone device 12 on the receiving side in the embodiment of the present invention.
FIG. 9 is a view for use in explaining a function of the videophone device 12 on the transmitting side and the videophone device 14 on the receiving side in the embodiment of the present invention.
FIG. 10 is a view for showing a procedure sequence required until communication between the videophone device 12 and videophone device 14 (IP phone device) is achieved.
FIG. 11 is an example of information written in a function profile 42a in the embodiment of the present invention.

An embodiment of the present invention will be explained with reference to the accompanying drawings.

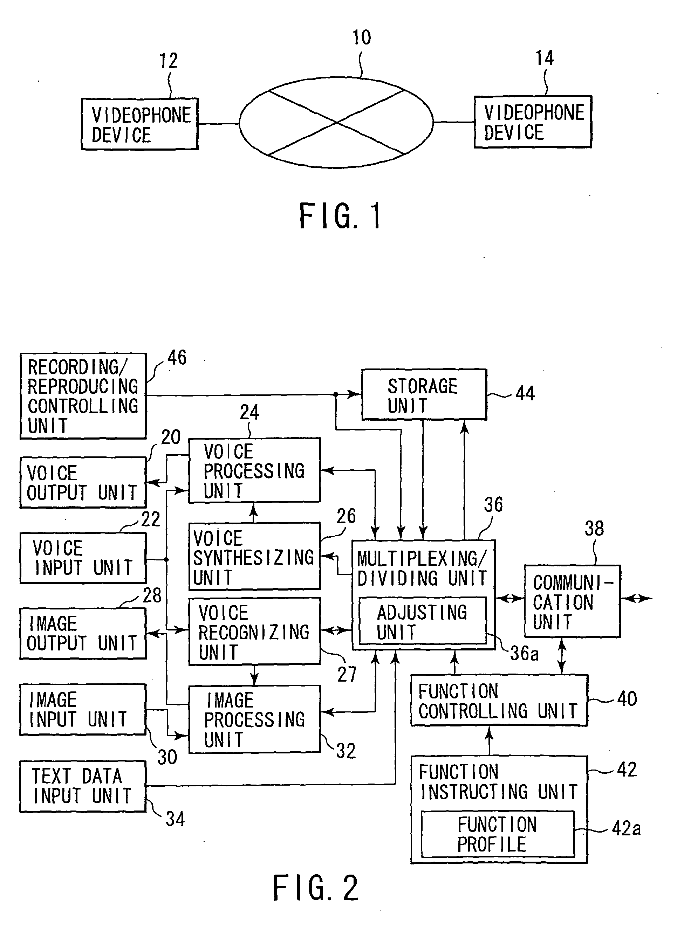

FIG. 1 is a block diagram of the structure of a video phone system according to the embodiment of the present invention.

In the video phone system, videophone devices 12 and 14 are connected together via a network 10. The videophone devices 12 and 14 are implemented with computers which read a program recorded in a recording medium such as a CD-ROM, a DVD or a magnetic disk, and is controlled in operation by the program. To be more specific, they are each implemented with a personal computer, a PDC (personal digital assistant), a mobile phone provided with a camera or a specific videophone device. The network 10 is an IP network including Internet, in which data is transmitted/received by using a protocol such as a TIP (transmission control protocol)/IP (internet protocol). The videophone devices 12 and 14 each have a communication function according to the IP (internet protocol).

FIG. 2 is a block diagram of each of the videophone devices 12 and 14 according to the embodiment of the present invention. As shown in FIG. 2, each of the videophone devices 12 and 14 comprises a voice output unit 20, a voice input unit 22, a voice processing unit 24, a voice synthesizing unit 26, a voice recognizing unit 27, an image output unit 28, an image input unit 30, an image processing unit 32, a text data input unit 34, a multiplexing/dividing unit 36, a communication unit 38, a function controlling unit 40, a function instructing unit 42, a storage unit 44 and a recording/reproducing controlling unit 46.

The voice output unit 20 outputs voice based on voice data output from the voice processing unit 24, and includes a speaker, etc. The voice input unit 22 inputs voice, and then outputs voice data to the voice processing unit 24 and the voice recognizing unit 27. The voice input unit 22 includes a microphone, etc. The voice output unit 20 and the voice input unit 22 may be independently provided in the videophone device, or may be formed as a single unit such as a handset or a single-unit headset.

The voice processing unit 24 performs decode processing on encoded voice data from the multiplexing/dividing unit 36, and also encode processing on voice data input from the voice input unit 22. Further, the voice processing unit 24 performs processing for causing voice data, which is generated by the voice synthesizing unit 26 based on the text data, to be output from the voice output unit 20.

The voice synthesizing unit 26 carries out voice synthesis on the basis of text data obtained by dividing of the multiplexing/dividing unit 36 to obtain synthetic voice, and outputs voice data of the synthetic voice to the voice processing unit 24.

The voice recognizing unit 27 performs voice recognition processing on the voice data input from the voice input unit 22, generates text data based on, e.g., voice, and outputs the text data to the multiplexing/dividing unit 36.

The image output unit 28 outputs an image based on image data output from the image processing unit 32, and includes a display unit such as a liquid crystal display or a CRT. The image input unit 30 performs an image pickup operation, and outputs image data to the image processing unit 32. Also, the image input unit 30 includes an image pickup device such as a camera.

The image processing unit 32 performs decode processing on encoded image data from the multiplexing/dividing unit 36, and code processing on image data input from the image output unit 28.

The text data input unit 34 generates text data based on the data input by an input device such as a keyboard, a tablet or a mouse, by using a program such as an IME (Input Method Editor).

The multiplexing/dividing unit 36 multiplexes data input from the voice processing unit 24 (voice data), the image processing unit 32 (image data), and the voice recognizing unit 27 or the text input unit (text data), and generates data in a data format in which data can be transmitted to a network 10 through the communication unit 38, e.g., multiplex stream data in which each of a number of data is packeted. Also, the multiplexing/dividing unit 36 divides the data received through the communication unit 38 into voice data, image data and text data, and outputs the voice data, the image data and the text data to the voice processing unit 24, the image processing unit 32 and the voice synthesizing unit 26, respectively. Furthermore, the multiplexing/dividing unit 36 executes multiplexing/dividing processing using, e.g., a MPEG (Moving Picture Experts Group) technique. In addition, the multiplexing/dividing unit 36 includes an adjusting unit 36a for adjusting the timing at which a videophone device of a party of the other end of a communication link displays a text based on text data, in accordance with data sent to the videophone device, i.e., adjusting generation of multiplex stream data such that reproduction of an image and voice is synchronized with displaying of the text. The adjusting unit 36a carries out adjustment such that the text is displayed by the device (videophone device) of the party of the other end based on the text data for a period time which is longer than the time period for which voice is input by the voice input unit 22.

The communication unit 38 controls data transmission/reception of, e.g., an TCP/IP.

The function control unit 40 controls multiplexing/dividing processing of the multiplexing/ dividing unit 36 in accordance with the data receiving function of the videophone device of the part of the other end, i.e., in accordance with whether the processing function of the videophone device of the party of the other end is applied to image data, voice data or text data, and causes only data, which can be processed by the videophone device of the party of the other end, to be transmitted thereto. Before communication with the videophone device of the party of the other end, the function control unit 40 acquires a function profile, in which information indicating a processing function is written, from the videophone device of the party of the other end through the communication unit 38, and controls the multiplexing/dividing unit 36 in accordance with the contents of the function profile.

The function instructing unit 42 provides the function profile 42a, which is to be transmitted before communication with the videophone device of the party of the other end, to the function control unit 40. The information to be written in the function profile 42a may be fixedly determined in accordance with the function of the videophone device, or may be arbitrarily determined to indicate a function which is not used, in accordance with a user's instruction given from an input device not shown.

The storage unit 44 stores data input to the multiplexing/dividing unit 36 through the communication unit 38. For example, in order to achieve an answer phone function, the storage unit 44 stores received data, e.g., image data, voice data and text data which are transmitted from the videophone device of the party of the other end. The storage unit 44 provides the stored received data to the recording/reproducing control unit 46, when an instruction for executing reproduction is given.

The recording/reproducing control unit 46 performs a control for causing the videophone device to function as an answer phone. When an answer-phone recording mode is set, the recording/reproducing control unit 46 causes data, which is received through the multiplexing/dividing unit 36, to be stored in the storage unit 44. Also, by giving an instruction for executing reproduction, the recording/reproducing control unit 46 causes the received data stored in the storage unit 44 to be provided to the multiplexing/dividing unit 36, and also causes an image (including a text) and voice to be output.

### (The first embodiment)

The following case will be referred to: the videophone device 12 on the transmitting side adds text data to image data and voice data, and then transmits those data to the videophone device 14 on the receiving side, and the videophone device 14 displays a character string based on the text data.

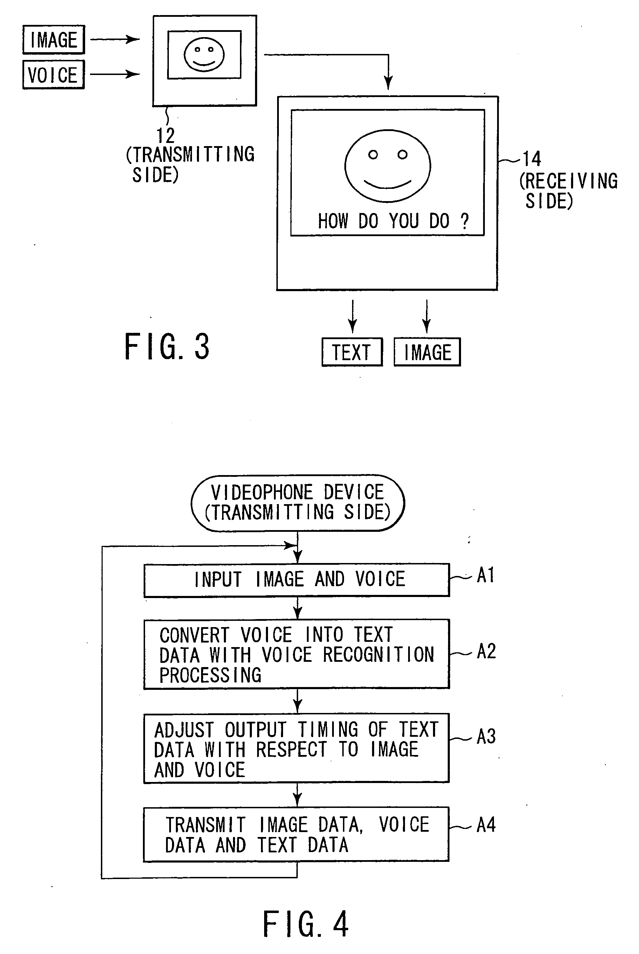

FIG. 3 shows a state in which for example, the videophone devices 12 and 14 are connected through the network 10, and data is transmitted from the videophone device 12 to the videophone device 14. FIG. 4 is a flowchart for use in explaining the operation of the videophone device on the transmitting side. Suppose that in the state in FIG. 3, the videophone device 14 on the receiving side is used by a deaf person, and also that the videophone device 12 is set to perform a function of adding text data to image data and voice data, and transmitting the data, and the videophone device 14 is set to perform a function of displaying a character string as a caption based on the text data contained in the received data.

First of all, in the videophone device 12, voice is input by the voice input unit 22 while an image of, e.g., a user's face is being picked up (Step A1). Image data input by the image input unit 30 is encoded by the video processing unit 32, and output to the multiplexing/dividing unit 36. Also, the voice data input from the voice input unit 22 is encoded by the voice processing unit 24, and output to the multiplexing/dividing unit 36.

On the other hand, the voice recognizing unit 27 inputs thereinto the voice data output from the voice input unit 22, and performs voice recognition processing on the voice data. For example, if the user says "How do you do?", voice recognition processing is carried out to generate text data with respect to "How do you do?" (Step A2).

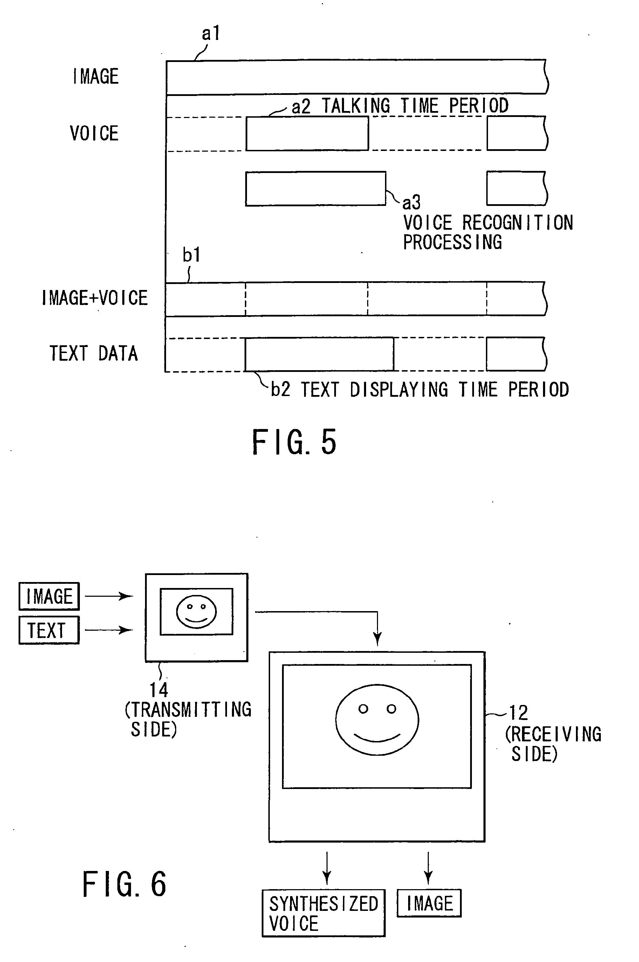

FIG. 5 shows a relationship between an image (a1) input by the image input unit 30, voice input by the voice input unit 22 (a talking time period) (a2), and an execution time period (a3) of the voice recognition processing. The voice recognizing unit 27 immediately executes voice recognition processing on voice input when the user talks with the videophone device, and outputs text data expressing the content of the user's speech substantially at the same time as the user stops talking.

The multiplexing/dividing unit 36 multiplexes voice data input from the voice processing unit 24, the image data input from the image processing unit 32, and text data from the voice recognizing unit 27. At this time, the adjusting unit 36a adjusts the output timing of the text associated with the image and voice. To be more specific, as shown in FIG. 5, the adjusting unit 36a carries out adjustment such that a text displaying time period b2 for which the text is displayed is longer than a talking time period a2 for which the user talks, and which is confirmed by checking the image and voice. This is because in general, it takes longer time to read characters displayed on the videophone device to know the content of the user's speech, than to hear voice output from the videophone device.

The multiplexing/dividing unit 36 generates multiplex stream data which is adjusted with respect to the output timing of the text associated with the image and voice, and transmits the multiplex stream data to the videophone device 14 of the party of the other end through the communication unit 38 (Step A4). It should be noted that the multiplexing/dividing unit 36 may be designed to generate multiplex stream data by synthesizing text data with image data and voice data at the adjusted output timing, and may be deigned to generate relevant information indicating a relationship in time between the text and the image and voice, and transmit the relevant information along with the multiplex stream data.

Also, the above explanation is given with respect to the case where the text data is generated by the voice recognition processing. However, the text data may be input by the text data input unit 34 (e.g., a keyboard). In this case, the multiplexing/dividing unit 36 does not adjust the output timing of the text data, since the timing of data inputting using the text data input unit 34 does not coincide with the timing at which the user talks (in addition, there is a case where the user does not talk). When text data is input from the text data input unit 34, the multiplexing/dividing unit 36 synthesizes the text data with the image data and voice data input along with the text data to obtain synthetic data, and transmits the synthetic data to the videophone device 14.

Next, when the videophone device 14 on the receiving side receives data from the videophone device 12 through the communication unit 38, the multiplexing/dividing dividing unit 36 divides the received data into image data, voice data and text data.

The image processing unit 32 synthesizes the text data with the image data obtained by dividing of the multiplexing/dividing unit 36 to obtain synthetic data, and causes the synthetic data to be output by the image output unit 28. To be more specific, the content of the speech of the user of the videophone device 12, i.e., the party of the other end, is displayed. For example, a character string "How do you do?" is displayed on a screen as a caption as shown in FIG. 3. On the other hand, the voice processing unit 24 causes voice to be output from the voice output unit 20 on the basis of the voice data obtained by dividing of the multiplexing/dividing unit 36.

In such a manner, the voice input at the videophone device 12 on the transmitting side is converted into text data, and then the text data is displayed as a caption on the screen at the videophone device 14 on the receiving side. Accordingly, even if the voice output at the videophone device 14 is not useful (for example, the videophone device 14 is used by a deaf person), communication can be achieved between the transmitting side and the receiving side. In addition, the character string is displayed on the screen for a longer time period than that for which the party of the other end speaks, as a result of which the contents of the speech can be reliably grasped.

Also, when a text is input by a keyboard or the like at the videophone device 12 on the receiving side without inputting voice, it can also be displayed as a caption on the screen at the videophone device 14 on the receiving side. Thus, even if voice inputting cannot be applied to the videophone devices 12 and 14, communication can be achieved therebetween.

The above explanation is given by referring to the case where the videophone device 12 on the transmitting side executes voice recognition processing, and transmits the text data along with the image and voice data, and the videophone device 14 on the receiving side synthesizes the text data with the image data. However, the videophone device 14 may carry out the voice recognition processing. In this case, the videophone device 12 transmits the input image data and voice data to the videophone device 14. At the videophone device 14, the voice processing unit 24 decodes the voice data obtained by dividing of the multiplexing/dividing unit 36, and the voice recognizing unit 27 performs voice recognition processing on the decoded voice data. The text data generated by the voice recognition processing of the voice recognizing unit 27 is output to the image processing unit 32. The image processing unit 32 adds text data to the image data and causes the image data including the text data to be displayed by the image output unit 28.

In such a manner, with respect to the image data and voice data transmitted from a transmitting terminal of the videophone device 12, the videophone device 14 recognizes voice in real time, and displays a character or character string as a caption on the screen. Accordingly, even if voice outputting is not useful for the receiving side using the videophone device 14, e.g., the videophone device 14 is used by a deaf person, the user of the videophone device 12 does not need to take such a fact into consideration.

Next, the following explanation is given with respect to the case wherein the videophone device 14 adds text data to image data, and then transmits these data, and the videophone device 12 perform voice synthesis on the basis of the text data.

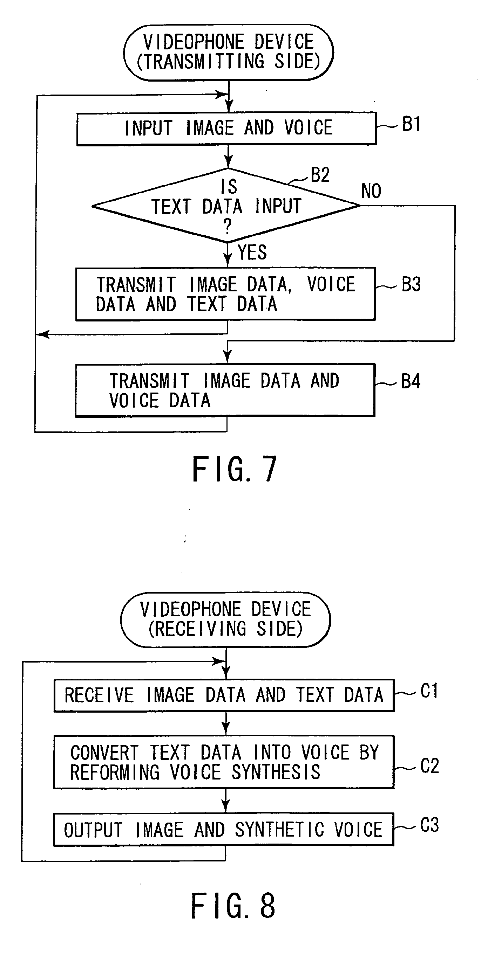

FIG. 6 shows a case where for example, the videophone device 12 and the videophone device 14 are connected through the network 10, and data is transmitted from the videophone device 14 to the videophone device 12. In this case (FIG. 6), suppose the videophone device 14 on the transmitting side is used by a deaf person. FIG. 7 is a flowchart for explaining the operation of the videophone device 14 on the transmitting side. FIG. 8 is a flowchart for explaining the operation of the videophone device 12 on the receiving side.

Suppose the videophone device 14 is set to perform a function of adding text data to image data, and transmitting these data, and the videophone device 12 is set to perform a function of executing voice synthesis based on the text data contained in the data transmitted from the videophone device 14.

At the videophone device 14, voice is input by the voice input unit 22 while an image of, e.g., a user's face is picked up by the image input unit 30 (Step B1) . Image data input by the image input unit 30 is encoded by the image processing unit 32, and then output to the multiplexing/dividing unit 36. Also, voice data input by the voice input unit 22 is encoded by the voice processing unit 24, and then output to the multiplexing/dividing unit 36. In this case, suppose that the user of the videophone device does not speak.

At the videophone device 14, when the text data is input by the text data input unit 34 (employing a keyboard or the like) (Step B2), the text data is output to the multiplexing/dividing unit 36.

When the text data is input by the text data input unit 34, the multiplexing/dividing unit 36 synthesizes voice data, which is input from the voice processing unit 24 at that time, with voice data which is input from the voice recognizing unit 27 at that time, to thereby obtain synthetic voice, and then transmits the synthetic voice to the videophone device 12 (Step B3). If text data is not input, the multiplexing/dividing unit 36 transmits only image data and voice data to the videophone device 12 (Step B4).

Next, when the videophone device 12 on receiving side receives the data which is transmitted from the videophone device 14 through the communication unit 38, it divides the received data into image data, voice data and text data by means of the multiplexing/ dividing 36 (Step C1) .

The voice synthesizing unit 26 performs voice synthesis based on the text data obtained by dividing of the multiplexing/dividing unit 36, and outputs voice data obtained by the voice synthesis to the voice processing unit 24 (Step C2).

The voice processing unit 24 causes voice to be output from the voice output unit 20 on the basis of the voice data obtained by the voice synthesis. Also, the image processing unit 32 causes an image to be output by the image output unit 28 on the basis of the image data obtained by dividing of the multiplexing/dividing unit 36 (Step C3).

In the above manner, even if the videophone device 14 on the transmitting side does not input voice thereinto, when it inputs a text by using the text data input unit 34 employing a keyboard or the like, the videophone device 12 on the receiving side can vocally output data transmitted from the videophone device 14, since it can perform voice synthesis on the data. Thus, the videophone device enables the user to communicate as if in ordinary conversation. In addition, if it is not useful that the text is output (e.g., if the user is blind), conversation using voice can be achieved between the transmitting and receiving sides.

Furthermore, the videophone device 14 on the receiving side can be set to serve as answer phone in accordance with an instruction given by the user. When the videophone device 14 on the receiving side serves as an answer phone, it causes data transmitted through the communication unit 38 to be stored in the storage unit 44 by a control of the recording/reproducing controlling unit 46. In this case, the multiplexing/dividing unit 36 does not execute processing on the data transmitted through the communication unit 38. That is, the videophone device 14 does not output voice, an image or a text.

On the other hand, when data is stored in the storage unit 44, and then when an instruction for executing data reproduction is given by the user, the recording/reproducing controlling unit 46 provides the date stored in the storage unit 44 to the multiplexing/dividing unit 36. The multiplexing/dividing unit 36, as mentioned above, divides the data stored in the storage unit 44 into image data, voice data and text data. Thereby, voice and an image including a text can be output, or an image and voice generated by voice synthesis based on the text data can be output.

### (The second embodiment)

In the second embodiment, only data which can be handled by the function of the device on the receiving side can be transmitted from the transmitting side to the receiving side.

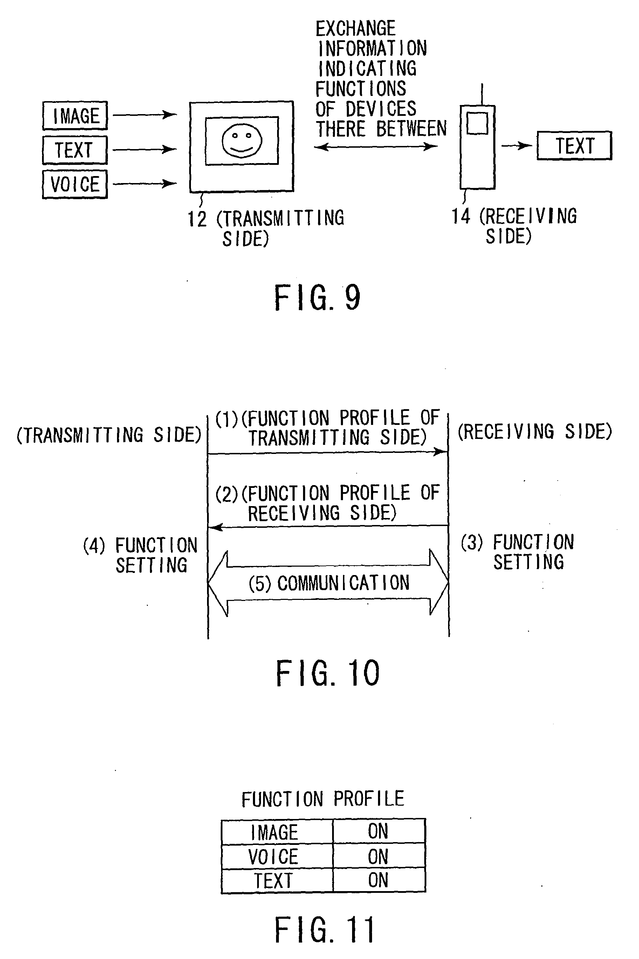

For example, as shown in FIG. 9, the videophone device 12 has a function of handling any of image data, text data and voice data. The videophone device 12 transmit a function profile containing information indicating the function of the videophone devices 12 to the videophone device 14. If the videophone device 14 (e.g., an IP phone device) can display only a text, a function profile containing information indicating the function of the videophone devices 14 is transmitted to the videophone device 12 before communication is carried out between the videophone device 12 and 14, as a result of which the videophone device 14 can recognize the data format of data which can be transmitted by both the videophone devices 12 and 14.

FIG. 10 shows a procedure sequence of operations carried out until communication is achieved between the videophone devices 12 and the videophone device 14 (IP phone device). To be more specific, the videophone devices 12 and 14 exchange function profiles 42a with each other, after executing a sequence of operations to connect with each other through the network 10. For example, the videophone device 12 transmits the function profile 42a to the videophone device 14 through the function controlling unit 40 and the communication unit 38 ((1) in FIG. 10). In the same manner, the videophone device 14 transmits the function profile 42a to the videophone device 12 ((2) in FIG. 10).

FIG. 11 shows an example of information written in the function profile 42a. In the example of FIG. 11, information is written which indicates that IMAGE is in the OFF state (which means that a function of handling image data is not provided), and VOICE and TEXT are in the ON state (which means that functions of handing voice data and text data are provided).

At the videophone device 12, the function controlling unit 40 limits the data to be subjected to synthesis of the multiplexing/dividing unit 36, in accordance with the information written in the function profile 42a transmitted from the videophone device 14, thereby controlling the data to be transmitted to the videophone device 14 ((4) in FIG. 10). In this case, the function controlling unit 40 sets the function of the videophone device 12 such that the videophone device 14 can transmit text data only.

Similarly, the function of the videophone device 14 is set to limit the data to be transmitted to the videophone device 12, in accordance with the function profile 42a transmitted from the videophone device 12 ((3) in FIG. 10).

In this example, the videophone device 14 on the receiving side has only a function of handling a text, and thus the videophone device 12 on the transmitting side transmits only text data in accordance with the specification of the videophone device 14. Needless to say, the videophone device 14 also transmits only text data. In such a manner, even if the videophone devices on the transmitting side and receiving side have different functions, they can communicate with each other.

The information written in the videophone devices 12 and 14 may be freely set in accordance with the user's instruction. To be more specific, with respect to each data shown in FIG. 11, the ON/OFF state may be freely determined in accordance with an instruction given by the user.

More specifically, even if the videophone device 12 is set to perform a function of handling all an image, voice and a text, and then if it is not necessary to transmit image data, the function profile 42a is set to indicate "OFF" with respect to image. Thereby, the videophone device 14 on the receiving side can be informed by the function profile 42a that the function of handling image in the videophone device 12 is in the OFF state, as a result of which the videophone device 14 is prevented from receiving text data.

In such a manner, the function of the videophone device can be set by the user. Accordingly, for example, even if the limit to which the network 10 can handle information communication is small, videophone devices can flexibly communicate with each other in accordance with the above limit, by limiting the data to be handled to, e.g., text data and voice data.

## Claims

1. A videophone device for transmitting/receiving an image and voice to/from another device through a network, **characterized by** comprising:
a voice input unit (22) configured to input voice data;
an image input unit (30) configured to input image data;
a text data generating unit (27, 34) configured to generate text data while at least one of the image data and the voice data, is being input;
a synthesizing unit (36) configured to synthesize the voice data, the image data and the text data to obtain data; and
a communication unit (38) configured to transmit the data obtained by the synthesizing unit.

2. The videophone device according to claim 1, **characterized in that** the synthesizing unit (36) generates relevant information indicating a relationship of the text data with the image data and the voice data with respect to time.

3. The videophone device according to claim 1, **characterized in that** the text data generating unit includes a voice recognizing unit (27) configured to execute voice recognition on the voice data input by the voice input unit, to thereby generate text data.

4. The videophone device according to claim 1, **characterized in that** the text data generating unit includes a text data input unit (34) configured to generate text data based on the data input from an input device.

5. The videophone device according to claim 1, **characterized in that** the synthesizing unit (36) includes an adjusting unit (36a) configured to adjust synthesizing of the text data generated by the text data generating unit with the image data and the voice data, such that reproduction of the image and the voice by the other device is synchronized with displaying of the text by the other device.

6. The videophone device according to claim 5, **characterized in that** the adjusting unit (36a) is configured to adjust a displaying time period such that a text based on the text data is displayed for a longer time period than that for which voice is input by the voice input unit.

7. A videophone device for transmitting/receiving an image and voice to/from another device through a network, **characterized by** comprising:
a communication unit (38) configured to receive, through a network, data in which image data and text data are synthesized;
a dividing unit (36) configured to divide the data received by the communication unit into the image data and the text data;
an image processing unit (32) configured to synthesize a text based on the text data obtained by dividing of the dividing unit with the image data obtained by dividing of the dividing unit; and
an image output unit (28) configured to output an image based on the image data with which the text is synthesized by the image processing unit.

8. The videophone device according to claim 7, **characterized by** further comprising:
a storage unit (44) configured to store the data received by the communication unit; and
a recording/reproducing unit (46) configured to cause the data stored in the storage unit to be divided by the dividing unit.

9. The videophone device according to claim 7, **characterized by** further comprising an adjusting unit (36a) for adjusting a timing at which the text is synthesized with the image data by the image processing unit.

10. A videophone device which is to be connected to another device through a network, **characterized by** comprising:
an image input unit (30) configured to input image data;
a text data input unit (27, 34) configured to input text data while the image data is being input by the image input unit;
a synthesizing unit (36) configured to synthesize the image data and the text data to obtain synthetic data; and
a communication unit (38) configured to transmit the synthetic data obtained by the synthesizing unit, through the network.

11. A videophone device which is to be connected to another device, through a network, **characterized by** comprising:
a communication unit (38) configured to receive data, in which image data and text data are synthesized, through the network;
a dividing unit (36) configured to divide the data received by the communication unit into the image data and the text data;
a voice synthesizing unit (26) configured to perform voice synthesis based on the text data obtained by dividing of the dividing unit;
a voice output unit (20) configured to output synthetic voice obtained by the voice synthesis performed by the voice synthesizing unit; and
an image output unit (28) configured to output an image based on the image data obtained by the dividing of the dividing unit.

12. A videophone device configured to transmit/receive an image and voice to/from another device through a network, **characterized by** comprising:
a information receiving unit (38) configured to receive information indicating a unit provided in the other device, from the other device, through the network;
a voice input unit (22) configured to input voice data;
an image input unit (30) configured to input image data;
a text data generating unit (27, 34) configured to generate text data while the image data and the voice data are being input by the image input unit and the voice input unit, respectively;
a synthesizing unit (36) configured to selectively synthesize the voice data, the image data and the text data in accordance with the information indicating the unit provided in the other device, which is received by the information receiving unit, thereby obtaining synthetic data; and
a transmitting unit (38) configured to transmit the synthetic data obtained by the synthesizing unit, through the network.

13. The videophone device according to claim 12, **characterized by** further comprising:
an information transmitting unit (40, 42, 38) configured to transmit information indicating the units provided in the videophone device, to the other device, through the network; and
a setting unit (40) configured to set the units in accordance with the information transmitted by the information transmitting unit, in such a manner as to allow an optional one or ones of the units to be used.

14. A data transmitting/receiving method of a videophone device for transmitting/receiving an image and voice to/from another device through a network, **characterized by** comprising:
generating first voice data and first image data, and generating first text data while inputting the first image data and the first voice data;
synthesizing the first voice data, the first image data and the first text data to obtain synthetic data, and transmitting the synthetic data;
receiving data transmitted from the other device through the network;
dividing the received data into second image data and second text data; and
adding the second text data to the second image data to obtain synthetic data.

15. The method according to claim 14, **characterized by** further comprising executing voice recognition on the first voice data, to thereby obtain the first text data.

16. The method according to claim 14, **characterized by** further comprising adjusting synthesizing of the first text data with the first image data and the first voice data such that reproduction of an image and voice by the other device is synchronized with displaying of a text by the other device.

17. A data transmitting/receiving method of a video phone system for transmitting/receiving an image and voice to/from a videophone device through a network, **characterized by** comprising:
in a first videophone device, (i) inputting voice data and image data, and generating text data while inputting the voice data and the image data; and (ii) synthesizing the voice data, the image data and the text data to obtain synthetic data, and transmitting the synthetic data through the network, and
in a second vide phone device, (i) receiving the data transmitted from the first videophone device through the network, (ii) dividing the image data and the text data of the transmitted data , and (iii) synthesizing a text based on the text data with the image data to obtain synthetic data, and outputting the synthetic data.

18. The method according to claim 17, **characterized by** further comprising adjusting synthesizing of the text data generated by the text data generating unit with the image data and the voice data such that reproduction of an image and voice by the other device is synchronized with displaying of a text by the other device.

19. A data transmitting/receiving method of a videophone device for transmitting/receiving an image and voice to/from another videophone device through a network, **characterized by** comprising:
in a first videophone device, (i) inputting image data, and inputting text data while inputting the image data; and (ii) synthesizing the image data and the text data to obtain synthetic data, and outputting the synthetic data, and
in a second videophone device, (i) receiving the synthetic data transmitted from the first videophone device, through the network, (ii) dividing the transmitted data into the image data and the text data, and (iii) performing voice synthesis based on the text data to output voice, and output an image based on the image data.
